# FASCICULE DE BREVET EUROPEEN

(11) **EP 2 490 885 B1**
(45) Date de publication et mention de la délivrance du brevet: **28.08.2013**
(21) Numéro de dépôt: 10766289.2
(22) Date de dépôt: 20.10.2010
(51) Int. Cl.: B29D 30/06, B29C 33/30

(54) **PRESSE DE VULCANISATION**
VULKANISIERUNGSPRESSE
VULCANIZING PRESS

(30) Priorité: 20.10.2009 FR 0957362
(43) Date de publication de la demande: 29.08.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: HERAULT, Stéphane, F-63100 Clermont-Ferrand (FR)
(74) Mandataire: Lasson, Cédric Y. M.
(86) Numéro de dépôt international: PCT/EP2010/065779
(87) Numéro de publication internationale: WO 2011/048131

(56) Documents cités:
- EP-A1- 1 637 304
- EP-A2- 0 520 253
- DE-A1-102009 012 191
- US-A- 4 580 959
- US-A- 5 863 484

## Description

### DOMAINE DE L'INVENTION

L'invention concerne une presse de vulcanisation pour la fabrication de pneumatique ainsi qu'un système pour la fabrication de pneumatique utilisant une telle presse de vulcanisation.

### ETAT DE LA TECHNIQUE

Le document FR1570554 divulgue une presse de vulcanisation comprenant un plateau supérieur et un plateau inférieur.

Un moule, disposé entre le plateau supérieur et le plateau inférieur, permet de donner une forme prédéterminée à un pneumatique. Plus particulièrement, le plateau supérieur et le plateau inférieur sont aptes à prendre une position proximale dans laquelle lesdits plateaux ferment le moule pour donner la forme prédéterminée au pneumatique et une position distale dans laquelle le moule est ouvert.

D'une manière connue, le moule comporte une partie supérieure et une partie inférieure fixées respectivement au plateau supérieur et au plateau inférieur à l'aide d'un ensemble broches-écrous.
Les documents DE 102009012191 - A, US 5863484 - A, US 4580959 - A et EP 1637304 - A divulguent individuellement des presses de vulcanisation pour pneumatiques, chaque presse comportant :
- deux plateaux aptes à prendre une position proximale dans laquelle lesdits plateaux ferment un moule pour donner une forme prédéterminée à un pneumatique et une position distale dans laquelle le moule est ouvert;
- au moins un alésage formé dans un desdits plateaux, dit plateau support, le diamètre dudit alésage étant déterminé de sorte à laisser passer une tête de broche;
- un dispositif de verrouillage/déverrouillage comportant une première butée mobile entre une position de repos et une position active dans laquelle ladite première butée est interposée entre la tête de la broche et le plateau support, pour maintenir ladite broche dans l'alésage, la queue de ladite broche étant fixée au moule;
- le plateau support comprenant un plateau résistant et un plateau chauffant disposé entre le plateau résistant et le moule.

Pour pouvoir former, avec une même presse de vulcanisation, différents types de pneumatique comportant différentes caractéristiques (de dimensions, de sculpture de la bande de roulement, etc..), il est possible de changer de moule en desserrant les différents écrous et en chargeant un nouveau moule sur le plateau fixe. Or une telle opération de changement de moule est souvent longue et fastidieuse puisqu'il est nécessaire de serrer et de desserrer manuellement les écrous. Cette opération est rendue d'autant plus délicate que les écrous sont parfois difficiles à accéder pour un opérateur.

Il existe donc un besoin pour optimiser le temps de changement d'un moule sur une presse de vulcanisation pour la fabrication de pneumatique.

### BREVE DESCRIPTION DE L'INVENTION

L'invention concerne une presse de vulcanisation comme définie dans la revendication 1, la presse comportant deux plateaux aptes à prendre une position proximale dans laquelle lesdits plateaux ferment un moule pour donner une forme prédéterminée à un pneumatique et une position distale dans laquelle le moule est ouvert, au moins un alésage étant formé dans un desdits plateaux dit plateau support, le diamètre dudit alésage étant déterminé de sorte à laisser passer une tête de broche. La presse de vulcanisation comprend en outre un dispositif de verrouillage/déverrouillage comportant une première butée mobile entre une position de repos et une position active dans laquelle ladite butée est interposée entre la tête de la broche et le plateau support pour maintenir ladite broche dans l'alésage, la queue de ladite broche étant fixée au moule.

Dans le cas où le plateau support est le plateau supérieur, on solidarise/désolidarise rapidement la partie supérieure du moule avec ledit plateau supérieur. Dans le cas où le plateau support est le plateau inférieur, on solidarise/désolidarise rapidement la partie inférieure du moule avec ledit plateau inférieur. L'invention peut être également utilisée à la fois pour la partie supérieure du moule et pour la partie inférieure du moule de sorte qu'il est possible de solidariser/désolidariser rapidement l'ensemble du moule avec la presse de vulcanisation.

L'invention permet ainsi d'optimiser le chargement/déchargement d'un moule dans une presse de vulcanisation.
Des formes préférentielles de l'invention sont définies dans les revendications dépendantes.

Dans une variante de l'invention, la première butée mobile comporte une cavité comprenant un épaulement apte à venir en contact avec la tête de la broche, un trou dont le diamètre est déterminé de sorte à laisser passer la tête de la broche, une zone de glissement s'étendant entre l'épaulement et le trou.

La première butée mobile permet le blocage de la tête de la broche lorsque ladite butée est en position active tout en rendant possible le glissement de ladite tête dans l'alésage lorsque la première butée mobile est en position de repos.

Dans une variante de réalisation, l'épaulement est décalé en hauteur par rapport à la zone de glissement de sorte à bloquer la tête de la broche dans une direction parallèle à l'extension de ladite zone de glissement lorsque la première butée mobile est en position active.

On améliore ainsi la sécurité de la presse de vulcanisation en assurant un auto-blocage de la première butée mobile avec la tête de la broche lorsque la première butée mobile est dans sa position active. Pour déplacer la première butée mobile vers sa position de repos, il convient ainsi de décaler verticalement la tête de la broche afin de mettre la partie inférieure de la tête de la broche au même niveau que la zone de glissement, puis de déplacer horizontalement la première butée mobile.

Dans une variante de réalisation, le plateau support comprend un plateau résistant et un plateau chauffant disposé entre le plateau résistant et le moule, ladite presse comprenant en outre des moyens élastiques disposés entre le plateau résistant et le plateau chauffant pour maintenir ledit plateau chauffant en contact avec le moule.

Pour pouvoir décaler la tête de la broche afin de mettre la partie inférieure de la tête de la broche au même niveau que la zone de glissement, il est nécessaire de prévoir un jeu dans la presse de vulcanisation. Lorsque ce jeu est présent entre la tête de la broche et l'épaulement, la tête de la broche est alors au même niveau que la zone de glissement. Lorsque la tête de la broche repose sur l'épaulement, c'est-à-dire lorsque la broche est dans sa position active, le jeu est présent entre le plateau résistant et le plateau chauffant. Pour maintenir constamment un contact entre le plateau chauffant et le moule, on utilise des moyens élastiques disposés entre le plateau résistant et le plateau chauffant. Ainsi, on s'assure que le moule conserve une température globalement constante dans le temps, et ceci même lorsque le plateau support est dans sa position distale. On optimise ainsi le temps de vulcanisation du pneumatique, puisqu'il n'est pas nécessaire de prévoir à chaque cycle de fermeture/ouverture du moule un temps pour remonter la température du moule à la température de vulcanisation.

Dans une variante de réalisation, la zone de glissement forme une rampe entre l'épaulement et le trou.

Ainsi, il n'est pas nécessaire de prévoir un jeu particulier entre le plateau chauffant et le plateau résistant. C'est la pente de la zone de glissement qui va permettre de bloquer/débloquer la tête de la broche vis-à-vis de l'épaulement.

Dans une variante de réalisation, la première butée mobile comporte deux cavités.

Il est ainsi possible de fixer des moules de taille différente sur la presse de vulcanisation.

Dans une variante de réalisation, la première butée mobile comporte des moyens de pivotement autour desquels est apte à tourner une bielle de commande du mouvement d'une seconde butée mobile.

La bielle de commande permet de relier deux butées mobiles. Il est alors possible de rendre dépendant le mouvement de ces deux butées mobiles pour contrôler la solidarisation et la désolidarisation de deux parties de moule avec la presse de vulcanisation.

Dans une variante de réalisation, la presse comprend quatre butées mobiles disposées sur le plateau support de sorte à ce que chaque butée mobile est en vis-à-vis avec une des autres butées mobiles, trois bielles de commande, les bielles de commande reliant les butées mobiles deux par deux, un actionneur relié par des moyens de liaison à une desdites butées pour contrôler le mouvement des différentes butées mobiles.

On peut alors contrôler facilement le mouvement des différentes butées mobiles pour contrôler de manière coordonnée la solidarisation et la désolidarisation de plusieurs parties de moule avec la presse de vulcanisation.

L'invention permet ainsi d'optimiser le temps de changement d'un moule sur une presse de vulcanisation.

Un autre objet de l'invention concerne un système comme défini dans la revendication 7, pour la fabrication d'un pneumatique comportant une presse de vulcanisation conformément à la presse de vulcanisation décrite ci-dessus, un moule disposé entre les plateaux de la presse de vulcanisation et au moins une broche destinée à fixer le moule à la presse de vulcanisation.

### BREVE DESCRIPTION DES FIGURES

D'autres caractéristiques et avantages de l'invention ressortiront de la description suivante, donnée à titre d'exemple, sans caractère limitatif, en regard des dessins annexés sur lesquels :
- la figure 1 représente une vue en coupe partielle d'une presse de vulcanisation selon l'invention pour la fabrication de pneumatique;
- la figure 2 représente une vue en perspective d'un premier exemple d'une première butée mobile appartenant à la presse de vulcanisation de la figure 1;
- la figure 3 représente une vue en perspective d'un second exemple d'une première butée mobile appartenant à la presse de vulcanisation de la figure 1;
- les figures 4a, 4b représentent des vues de dessus de la presse de vulcanisation de la figure 1 dans deux positions différentes d'un ensemble bielles de commande-butées mobiles;
- les figures 5a, 5b, 5c, 5d représentent différentes étapes d'un procédé de démontage d'un moule sur la presse de vulcanisation de la figure 1.

### DESCRIPTION DES MODES DE REALISATION PREFERES DE L'INVENTION

Dans la présente description, l'invention est décrite en lien avec l'utilisation de moules de type à secteurs. Toutefois, on notera d'emblée que l'invention n'est pas limitée à l'utilisation de ce type de moule mais s'étend à d'autres types de moules tels que des moules en deux parties, dits « moules coquilles ».

Dans la description qui va suivre, des éléments sensiblement identiques ou similaires seront désignés par des références identiques.

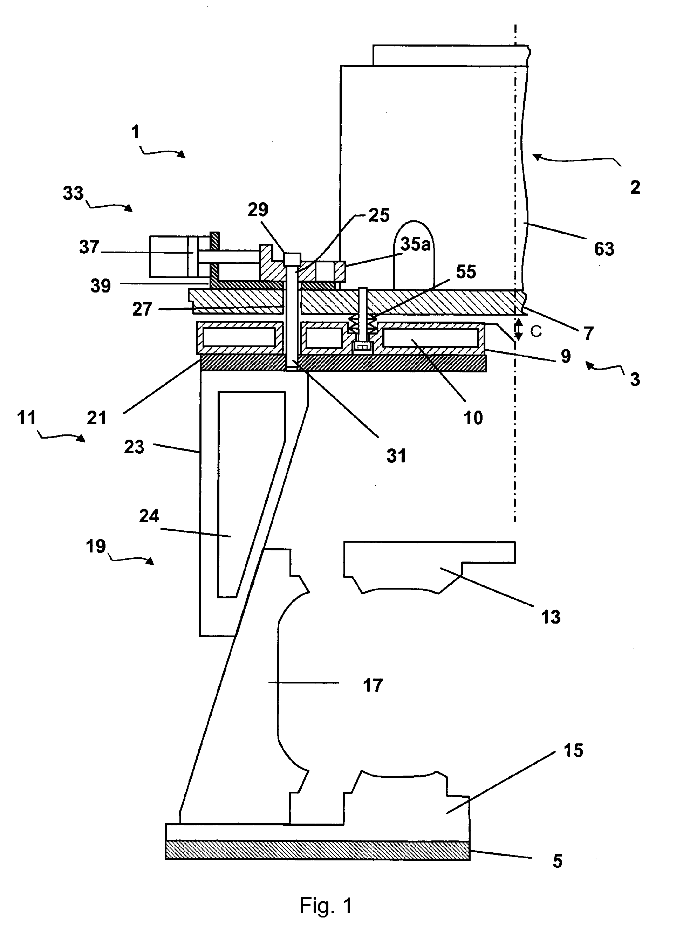

La figure 1 présente une vue en coupe partielle d'un système 1 pour la fabrication de pneumatique. Le système 1 comprend une presse de vulcanisation 2 comportant un plateau supérieur 3 et un plateau inférieur 5. Le plateau inférieur 5 est ici fixe et le plateau supérieur 3 est mobile verticalement. En variante, il est possible que le plateau supérieur 3 soit fixe et que le plateau inférieur soit mobile verticalement. Toutes les combinaisons de mouvement entre le plateau supérieur et le plateau inférieur sont possibles.

Le système 1 comprend également un moule 11. Le moule 11 est disposé entre le plateau supérieur 3 et le plateau inférieur 5. Le moule 11 est divisé ici en une pluralité de parties de moule 13, 15, 17, 19. Le moule 11 comprend notamment des coquilles supérieures 13, des coquilles inférieures 15. Le moule 11 comprend également une pluralité de secteurs 17 aptes à entrer en contact avec les coquilles supérieures 13 et les coquilles inférieures 15. Le moule comprend également des couronnes 19 configurées pour déplacer les secteurs 17 vers les coquilles supérieures 13 et les coquilles inférieures 15. Les couronnes 19 sont disposées autour des secteurs 17 et comprennent un plateau de base 21 et un montant 23 disposé transversalement par rapport au plateau de base 21. Le montant 23 a en section la forme globale d'un triangle. Pour une meilleure compréhension de l'invention, on a représenté sur la figure 1 une seule coquille supérieure 13, une seule coquille inférieure 15, un seul secteur 17, et une seule couronne 19.

L'invention s'applique ici à la fixation de la couronne 19 avec le plateau supérieur 3, appelé dans la suite de la description plateau support 3.

Bien entendu, l'invention peut s'appliquer à la fixation de la coquille inférieure 15 sur le plateau inférieur 5, et le plateau inférieur 5 est alors un plateau support.

Le plateau support 3 supporte ici la couronne 19 du moule 11. On notera dès à présent que la coquille supérieure 13 est, ici, supportée par un vérin (non représenté) appartenant à la presse de vulcanisation 2.

Le plateau support 3 se déplace entre une position proximale par rapport au plateau inférieur 5 et une position distale par rapport audit plateau inférieur 5.

Dans la position distale telle que représentée sur la figure 1, les différentes parties du moule 13, 15, 17, 19 sont suffisamment espacées pour pouvoir introduire un pneumatique à vulcaniser. De la même manière, dans cette position distale, les différentes parties du moule 13, 15, 17, 19 sont suffisamment espacées pour pouvoir sortir un pneumatique vulcanisé.

Dans la position proximale, les coquilles supérieures 13, les coquilles inférieures 15 et la pluralité de secteurs 17 forment un logement destiné à enfermer un pneumatique pour le vulcaniser.

La vulcanisation est une étape de fabrication qui consiste à faire passer le caoutchouc du pneumatique d'un état plastique à un état élastique. Au cours de cette étape, il est possible de former la sculpture du pneumatique (rainures, incisions, etc..). Les secteurs 17 comportent pour cela en interne, des éléments moulants particuliers (non représentés).

On notera que le plateau support 3 et le montant 23 comportent des espaces internes 10, 24 pour le passage d'un fluide porté à très haute température, tel que de la vapeur d'eau, en vue de chauffer la coquille supérieure 13, la coquille inférieure 15 et le secteur 17.

Le système 1 pour la fabrication de pneumatique comprend également au moins une broche 25 disposée dans un alésage 27 formé dans le plateau support 3. La broche 25 comprend une tête 29 et une queue 31 opposée à la tête. La queue 31 de la broche 25 est ici fixée au plateau de base 21 de la couronne 19. Le diamètre de l'alésage 27 est déterminé de sorte à laisser passer la tête de la broche 25.

La presse de vulcanisation 2 comprend un dispositif de verrouillage/déverrouillage 33 comportant une première butée 35a mobile entre une position de repos et une position active. La première butée mobile 35a est, sur la figure 1, dans la position active. Dans cette position active, la première butée 35a est interposée entre la tête 29 de la broche 25 et le plateau support 3 afin de maintenir la broche 25 dans l'alésage 27.

La première butée mobile 35a est reliée à un actionneur 37 apte à déplacer ladite butée mobile 35a. Plus particulièrement, la première butée mobile 35a est ici apte à glisser sur une plaque de maintien 39 reliée au bâti de l'actionneur 37.

On notera que le plateau support 3 comprend un plateau résistant 7 et un plateau chauffant 9.

Le plateau résistant 7 est la partie du plateau support 3 qui est reliée à un vérin 63 pour le déplacement vertical dudit plateau support 3.

Le plateau chauffant 9 comprend les espaces internes 10 pour le passage du fluide porté à très haute température.

Un jeu C est présent entre le plateau résistant 7 et le plateau chauffant 9 lorsque le plateau support 3 est dans la position distale de la figure 1.

Lorsque le plateau support 3 est dans sa position proximale, le jeu C entre le plateau résistant 7 et le plateau support 3 disparaît. Ce jeu C se retrouve entre la tête 29 de la broche 25 et l'épaulement 49 ce qui permet de rendre possible le déplacement de la première butée mobile 35a vers sa position de repos.

On notera également sur la figure 1 la présence de moyens élastiques 55, de type ressort à compression, entre le plateau résistant 7 et le plateau chauffant 9. Ces moyens élastiques 55 permettent de maintenir le plateau chauffant 9 en contact avec le plateau de base 21 de la couronne 19 tout en maintenant une certaine distance entre le plateau chauffant 9 et le plateau résistant 7. On améliore ainsi la transmission thermique entre le plateau chauffant 9 et le plateau de base 21 et on évite la déperdition thermique entre le plateau chauffant 9 et le plateau résistant 7.

De la même manière, les moyens élastiques permettent de ramener le plateau chauffant 9 au contact avec le plateau de base 21 lorsque le plateau support 3 quitte la position proximale. En effet à cet instant, il se peut que le plateau chauffant 9 s'arc-boute entre le plateau résistant 7 et le plateau de base 21 sous l'effet du mouvement du plateau support 3. Il est donc nécessaire de prévoir ces moyens élastiques 55 pour ramener le plateau chauffant 9 contre le plateau de base 21.

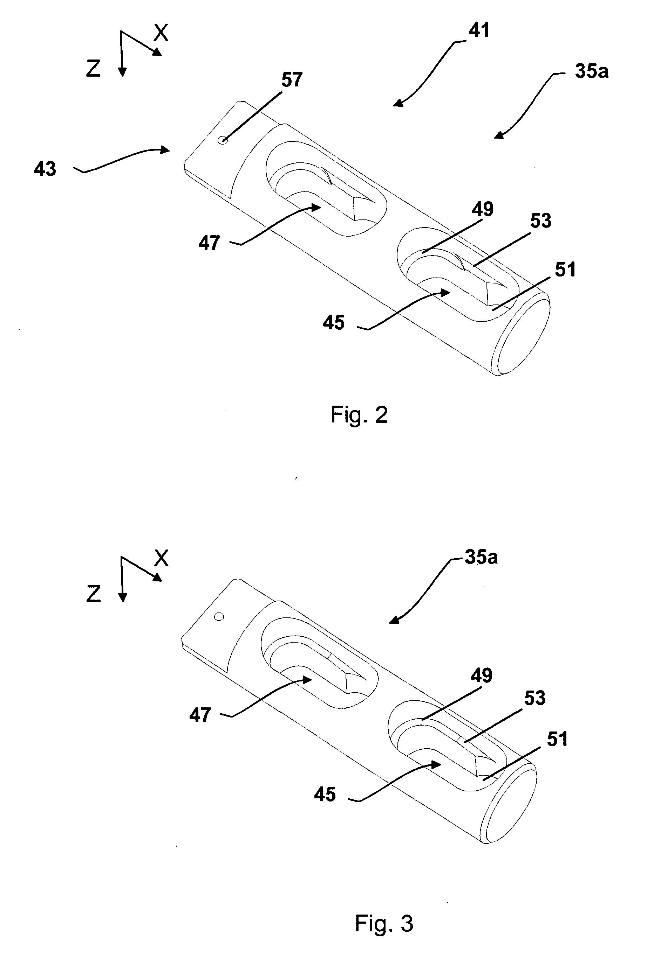

La figure 2 présente une vue en perspective d'un premier exemple d'une première butée mobile 35a. La première buté mobile 35a comprend ici une partie 41 globalement cylindrique et un méplat 43 venu de matière avec le partie cylindrique 41.

La partie 41 comporte une première cavité 45 et une seconde cavité 47 identique à la première cavité 45. La seconde cavité 47 est distante de la première cavité 45 dans la longueur de la première butée mobile 35a, c'est-à-dire selon une direction horizontale X. Le dispositif de verrouillage/déverrouillage 33 peut ainsi s'adapter à différentes tailles de moule 11.

Chaque cavité comprend un épaulement 49 adapté pour venir en contact avec la tête 29 de la broche 25, un trou 51 et une zone de glissement 53 s'étendant entre l'épaulement 49 et le trou 51.

Le trou 51 a un diamètre déterminé de sorte à laisser passer la tête 29 de la broche 25.

La zone de glissement 53 est une surface lisse de sorte à faciliter le glissement de la tête 29 de la broche 25 lorsque la première butée mobile 35a se déplace de la position active vers la position de repos.

Afin de maintenir la broche 25 dans l'alésage 27 lorsque la première butée mobile 35a est en position active, il est prévu que la zone de glissement 53 s'étend dans la direction horizontale X et que l'épaulement 49 est décalé en hauteur, c'est-à-dire décalé selon une direction verticale Z, par rapport à la zone de glissement 53. La tête 29 de la broche 25 est ainsi bloquée dans la direction horizontale X. On améliore alors la sécurité du système de fabrication 1 en assurant un auto-blocage de la première butée 35a avec la tête 29 de la broche 25 lorsque la première butée mobile 35a est dans sa position active.

Pour déplacer la première butée mobile 35a vers sa position de repos, il convient de décaler en hauteur la tête 29 de la broche 25 par rapport à l'épaulement 49 afin de mettre la partie inférieure de la tête 29 au même niveau que la zone de glissement 53. Lorsque la partie inférieure de la tête 29 atteint ce niveau, l'actionneur 37 peut déplacer la première butée mobile 35a vers sa position de repos. Ce décalage en hauteur de la tête 29 de la broche 25 est possible lorsque le plateau support 3 est dans sa position proximale grâce à l'annulation du jeu C entre le plateau résistant 7 et le plateau chauffant 9 et à la présence dudit jeu C entre la tête de la broche 25 et l'épaulement 49.

La figure 3 présente un autre mode de réalisation de la première butée mobile 35a. Dans ce mode de réalisation, la zone de glissement 53 forme une rampe entre l'épaulement 49 et le trou 51. Il n'est alors pas nécessaire de prévoir un jeu particulier entre le plateau résistant 7 et le plateau support 3, puisque c'est pente de la rampe qui permet d'amener la tête 29 de la broche 25 en blocage avec la première butée mobile 35a au niveau de l'épaulement 49.

Bien entendu, l'invention n'est pas limitée à ces deux modes de réalisation particuliers de la première butée mobile 35a et englobe tous les modes de réalisation équivalents.

Par exemple, il peut être prévu que la première butée mobile 35a se présente sous la forme d'une fourchette présentant deux bras. Les deux bras sont espacés d'une distance inférieure au diamètre de la tête de broche. Dans la position active de la première butée mobile 35a, les bras sont interposés entre la tête 29 de la broche 25 et le plateau support 3 pour maintenir ladite broche 25 dans l'alésage 27. Dans la position de repos de la première butée mobile 35a, les bras sont décalés par rapport à la tête 29 de la broche 25.

Dans un autre exemple, il peut être prévu que la première butée mobile effectue un mouvement de rotation pour passer d'une position active à une position de repos, au lieu d'une translation comme dans les exemples précédents. La première butée mobile peut alors se présenter sous la forme d'une came apte à s'interposer entre la tête 29 de la broche 25 et le plateau support 3 dans la position active, suite à une rotation depuis la position de repos.

La figure 2 présente au niveau du méplat 43 des moyens de pivotement 57 autour desquels est apte à tourner une bielle de commande.

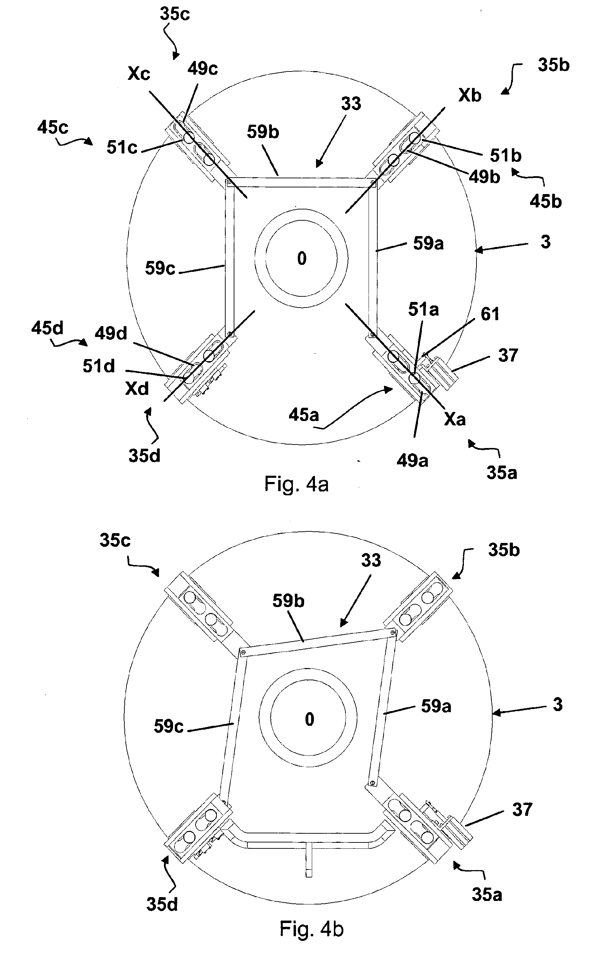

Les figures 4a, 4b présentent de manière plus détaillée le fonctionnement d'une telle bielle de commande.

Plus particulièrement, les figures 4a, 4b présentent un dispositif de verrouillage/déverrouillage 33 comportant quatre butées mobiles 35a, 35b ,35c, 35d s'étendant selon des axes Xa, Xb, Xc, Xd sur le plateau support 3. Le plateau support se présente ici sous la forme d'un disque et les butées mobiles 35a, 35b ,35c, 35d sont placées sur le plateau support 3 de sorte que les axes Xa, Xb, Xc, Xd se croisent au centre O du plateau support 3. Chaque butée mobile est ici placée en vis-à-vis avec une autre butée mobile.

Le dispositif de verrouillage 33 comporte également trois bielles de commande 59a, 59b, 59c. Chaque bielle de commande relie deux butées mobiles de sorte que la première bielle de commande 59a relie la première butée mobile 35a à une seconde butée mobile 35b, la seconde bielle de commande 59b relie la seconde butée mobile 35b à une troisième butée mobile 35c et la troisième bielle de commande 59c relie la troisième butée mobile 35c à une quatrième butée mobile 35d.

La première butée mobile 35a est reliée à l'actionneur 37 par des moyens de liaison 61.

On notera qu'il existe ici deux types de butée mobile. La première butée mobile 35a et la troisième butée mobile 35c dans laquelle des trous 51a, 51c sont plus proches du centre O que des épaulements 49a, 49c, appartiennent à un premier type. La seconde butée mobile 35b et la quatrième butée mobile 35d dans laquelle des trous 51b, 51d sont plus éloignés du centre O que des épaulements 49b, 49d, appartiennent à un second type.

A la figure 4a les différentes butées mobiles 35a, 35b, 35c, 35d sont toutes dans leur position de repos.

A la figure 4b les différentes butées mobiles 35a, 35b, 35c, 35d sont toutes dans leur position active. Le passage des positions de repos aux positions actives se fait par l'intermédiaire de l'actionneur 37. En effet, lorsque l'actionneur 37 déplace la première butée mobile 35a de la position de la figure 4a vers la position de la figure 4b, la première butée mobile 35a est dirigée vers le centre O du plateau support 3. La bielle 59a entraîne la seconde butée mobile 35b à l'opposé du centre O. La bielle 59b entraîne alors la troisième butée mobile 35c vers le centre O et la bielle 59c entraîne la quatrième butée mobile 35d à l'opposé du centre O.

Grâce au dispositif de verrouillage/déverrouillage 33 des figures 4a, 4b, il est possible de commander le déplacement des différentes butées mobiles 35a, 35b, 35c, 35d à l'aide d'un seul actionneur 37.

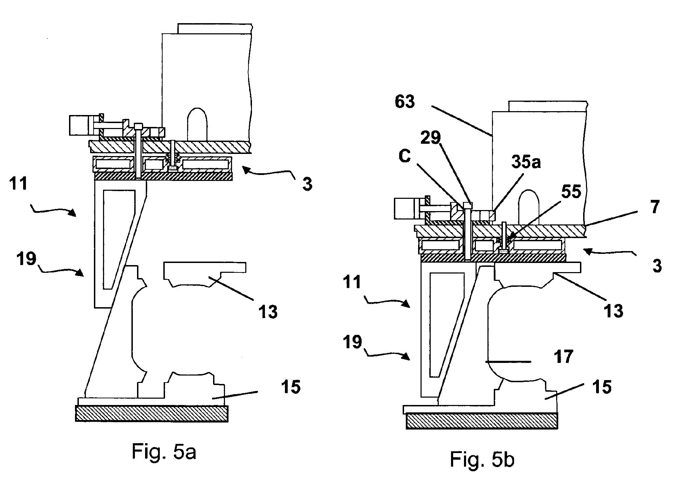

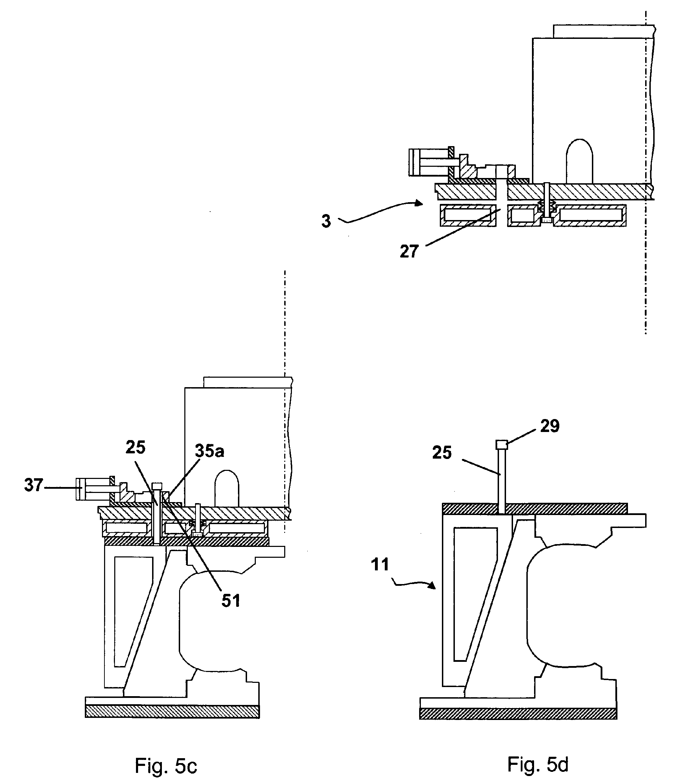

Nous allons maintenant présenter plus en détail, un procédé de démontage d'un moule à l'aide des figures 5a, 5b, 5c, 5d.

La figure 5a présente le plateau support 3 dans la position distale de la figure 1. La couronne 19, la coquille supérieure 13, la coquille inférieure 15 sont distantes. Dans cette position, le moule est dit ouvert.

La figure 5b présente le plateau support 3 dans sa position proximale. Le secteur 17 est en contact avec la coquille supérieure 13 et la coquille inférieure 15. Dans cette position, le moule 11 est dit fermé.

Pour passer de la position de la figure 5a à la position de la figure 5b, le vérin 63 agit sur le plateau résistant 7 pour déplacer la couronne 19 vers la coquille inférieure 15. De manière coordonnée, la coquille supérieure 13 est déplacée vers la coquille inférieure 15 par un autre vérin (non représenté). La couronne 19 est configurée de sorte que son déplacement vertical vers la coquille inférieure 15 entraîne un mouvement horizontal du secteur 17 vers la coquille supérieure 13 et la coquille inférieure 15.

On notera que dans la configuration de la figure 5b, les moyens élastiques 55 sont comprimés et le jeu C se retrouve entre la tête 29 de la broche et la première butée mobile 35a.

A la figure 5c, la première butée mobile 35a est dans sa position de repos suite à un mouvement de l'actionneur 37. Dans cette position de repos, la broche 25 est dans le trou 51 de la première butée mobile 35a.

La figure 5d représente une position dans laquelle le plateau support 3 est revenu dans sa position distale. Le plateau support 3 est alors désolidarisé du moule 11 puisque la tête 29 de broche 25 n'a pas été retenue dans l'alésage 27. Il est alors possible de décharger le moule de la presse de vulcanisation à partir de la position de la figure 5d.

La présente demande concerne également un procédé de montage du moule sur la presse de vulcanisation. Ce procédé comprend une étape de chargement du moule sur le plateau inférieur de sorte à positionner des têtes de broche par rapport à des alésages formés dans le plateau support. Le procédé de montage comprend également une étape de déplacement du plateau support vers la position proximale de sorte à faire pénétrer les têtes de broche dans les alésages respectifs. En position proximale, les butées mobiles sont déplacées vers leur position active pour bloquer les têtes de broche et fixer le moule à la presse de vulcanisation.

## Revendications

1. - Presse de vulcanisation comportant :
- deux plateaux (3, 5) aptes à prendre une position proximale dans laquelle lesdits plateaux (3,5) ferment un moule (11) pour donner une forme prédéterminée à un pneumatique et une position distale dans laquelle le moule est ouvert;
- au moins un alésage (27) formé dans un desdits plateaux (3, 5) dit plateau support, le diamètre dudit alésage étant déterminé de sorte à laisser passer une tête (29) de broche (25);
- un dispositif de verrouillage/déverrouillage (33) comportant une première butée mobile (35a) entre une position de repos et une position active dans laquelle ladite première butée est interposée entre la tête (29) de la broche (25) et le plateau support (3, 5) pour maintenir ladite broche (25) dans l'alésage (27), la queue (31) de ladite broche (25) étant fixée au moule (11), le plateau support (3, 5) comprenant un plateau résistant (7) et un plateau chauffant (9) disposé entre le plateau résistant et le moule (11), **caractérisée en ce que** ladite presse (2) comprend en outre des moyens élastiques (55) disposés entre le plateau résistant (7) et le plateau chauffant (9) pour maintenir ledit plateau chauffant (9) en contact avec le moule (11).

2. -Presse selon la revendication 1 **caractérisée en ce que** la première butée mobile (35a) comporte une cavité (45, 47) comprenant :
- un épaulement (49) apte à venir en contact avec la tête (29) de la broche (25);
- un trou (51) dont le diamètre est déterminé de sorte à laisser passer la tête (29) de la broche (25);
- une zone de glissement (53) s'étendant entre l'épaulement (49) et le trou (51).

3. - Presse selon la revendication 2 dans laquelle l'épaulement (49) est décalé en hauteur par rapport à la zone de glissement (53) de sorte à bloquer la tête (29) de la broche (25) dans une direction parallèle (X) à l'extension de ladite zone de glissement (53) lorsque la première butée mobile (35a) est en position active.

4. -Presse selon l'une quelconque des revendications précédentes dans laquelle la première butée mobile (35a) comporte deux cavités (45, 47).

5. - Presse selon l'une quelconque des revendications précédentes dans laquelle la première butée mobile (35a) comprend des moyens de pivotement (57) autour desquels est apte à tourner une bielle de commande (59a, 59b, 59c) du mouvement d'une seconde butée mobile (35b).

6. - Presse selon l'une quelconque des revendications précédentes comportant :
- quatre butées mobiles (35a, 35b, 35c, 35d) disposées sur le plateau support (3, 5) de sorte à ce que chaque butée mobile est en vis-à-vis avec une des autres butées mobiles ;
- trois bielles de commande (59a, 59b, 59c), les bielles de commande reliant les butées mobiles (35a, 35b, 35c, 35d) deux par deux ;
- un actionneur (37) relié par des moyens de liaison (61) à une desdites butées mobiles (35a) pour contrôler le mouvement des différentes butées mobiles (35a, 35b, 35c, 35d).

7. - Système pour la fabrication d'un pneumatique comportant :
- une presse de vulcanisation (2) selon l'une quelconque des revendications 1 à 6 ;
- un moule (11) disposé entre les plateaux (3, 5) de la presse de vulcanisation (2) ;
- au moins une broche (25) destinée à fixer le moule (11) à la presse de vulcanisation (2).

## Patentansprüche

1. Vulkanisierungspresse, die aufweist:
- zwei Platten (3, 5), die eine proximale Stellung, in der die Platten (3, 5) eine Form (11) schließen, um einem Luftreifen eine vordefinierte Form zu verleihen, und eine distale Stellung einnehmen können, in der die Form offen ist;
- mindestens eine Bohrung (27), die in einer der Platten (3, 5), Tragplatte genannt, geformt ist, wobei der Durchmesser der Bohrung so festgelegt wird, dass er einen Kopf (29) eines Stifts (25) durchlässt;
- eine Verriegelungs-/Entriegelungsvorrichtung (33), die einen ersten Anschlag (35a) aufweist, der zwischen einer Ruhestellung und einer aktiven Stellung beweglich ist, in der der erste Anschlag zwischen den Kopf (29) des Stifts (25) und die Tragplatte (3, 5) eingeschoben ist, um den Stift (25) in der Bohrung (27) zu halten, wobei der Schaft (31) des Stifts (25) an der Form (11) befestigt ist, wobei die Tragplatte (3, 5) eine Widerstandsplatte (7) und eine Heizplatte (9) enthält, die zwischen der Widerstandsplatte und der Form (11) angeordnet ist,
**dadurch gekennzeichnet, dass** die Presse (2) außerdem elastische Einrichtungen (55) enthält, die zwischen der Widerstandsplatte (7) und der Heizplatte (9) angeordnet sind, um die Heizplatte (9) mit der Form (11) in Kontakt zu halten.

2. Presse nach Anspruch 1, **dadurch gekennzeichnet, dass** der erste bewegliche Anschlag (35a) einen Hohlraum (45, 47) aufweist, der enthält:
- eine Schulter (49), die mit dem Kopf (29) des Stifts (25) in Kontakt kommen kann;
- ein Loch (51), dessen Durchmesser so festgelegt wird, dass er den Kopf (29) des Stifts (25) durchlässt;
- eine Gleitzone (53), die sich zwischen der Schulter (49) und dem Loch (51) erstreckt.

3. Presse nach Anspruch 2, wobei die Schulter (49) bezüglich der Gleitzone (53) in der Höhe versetzt ist, um den Kopf (29) des Stifts (25) in einer Richtung (X) parallel zur Ausdehnung der Gleitzone (53) zu blockieren, wenn der erste bewegliche Anschlag (35a) in der aktiven Stellung ist.

4. Presse nach einem der vorhergehenden Ansprüche, wobei der erste bewegliche Anschlag (35a) zwei Hohlräume (45, 47) aufweist.

5. Presse nach einem der vorhergehenden Ansprüche, wobei der erste bewegliche Anschlag (35a) Schwenkeinrichtungen (57) enthält, um die eine Steuerstange (59a, 59b, 59c) der Bewegung eines zweiten beweglichen Anschlags (35b) drehen kann.

6. Presse nach einem der vorhergehenden Ansprüche, die aufweist:
- vier bewegliche Anschläge (35a, 35b, 35c, 35d), die so auf der Tragplatte (3, 5) angeordnet sind, dass jeder bewegliche Anschlag einem der anderen beweglichen Anschläge gegenüberliegt;
- drei Steuerstangen (59a, 59b, 59c), wobei die Steuerstangen die beweglichen Anschläge (35a, 35b, 35c, 35d) paarweise verbinden;
- einen Stellantrieb (37), der durch Verbindungseinrichtungen (61) mit einem der beweglichen Anschläge (35a) verbunden ist, um die Bewegung der verschiedenen beweglichen Anschläge (35a, 35b, 35c, 35d) zu kontrollieren.

7. System zur Herstellung eines Luftreifens, das aufweist:
- eine Vulkanisierungspresse (2) nach einem der Ansprüche 1 bis 6;
- eine Form (11), die zwischen den Platten (3, 5) der Vulkanisierungspresse (2) angeordnet ist;
- mindestens einen Stift (25), der dazu bestimmt ist, die Form (11) an der Vulkanisierungspresse (2) zu befestigen.

## Claims

1. Vulcanizing press comprising:
- two plates (3, 5) capable of adopting a proximal position in which said plates (3, 5) close a mould (11), so as to give a tyre a predetermined shape, and a distal position in which the mould is open; and
- at least one bore (27) formed in one of said plates (3, 5) called the support plate, the diameter of said bore being defined so as to let the head (29) of a pin (25) pass thereinto,
- a locking/unlocking device (33) comprising a first movable stop (35a) that can move between a rest position and an active position, in which said first stop is interposed between the head (29) of the pin (25) and the support plate (3, 5) in order to keep said pin (25) in the bore (27), the shank (31) of said pin (25) being fixed to the mould (11), the support plate (3, 5) comprising a resisting plate (7) and a heating plate (9) placed between the resisting plate and the mould (11),
**characterized in that** said press (2) further includes elastic means (55) placed between the resisting plate (7) and the heating plate (9) in order to keep said heating plate (9) in contact with the mould (11).

2. Press according to Claim 1, **characterized in that** the first movable stop (35a) has a cavity (45, 47) comprising:
- a shoulder (49) capable of coming into contact with the head (29) of the pin (25);
- a hole (51), the diameter of which is defined so as to let the head (29) of the pin (25) pass thereinto; and
- a sliding zone (53) extending between the shoulder (49) and the hole (51).

3. Press according to Claim 2, in which the shoulder (49) is offset heightwise relative to the sliding zone (53) so as to prevent the head (29) of the pin (25) from moving in a direction (X) parallel to the extension of said sliding zone (53) when the first movable stop (35a) is in the active position.

4. Press according to any one of the preceding claims, in which the first movable stop (35a) has two cavities (45, 47).

5. Press according to any one of the preceding claims, in which the first movable stop (35a) comprises pivoting means (57) about which a control rod (59a, 59b, 59c) for controlling the movement of a second movable stop (35b) can rotate.

6. Press according to any one of the preceding claims, comprising:
- four movable stops (35a, 35b, 35c, 35d) placed on the support plate (3, 5) so that each movable stop is opposite one of the other movable stops;
- three control rods (59a, 59b, 59c), the control rods connecting the movable stops (35a, 35b, 35c, 35d) pairwise; and
- an actuator (37) connected by linking means (61) to one of said movable stops (35a) in order to control the movement of the various movable stops (35a, 35b, 35c, 35d).

7. System for manufacturing a tyre, comprising:
- a vulcanizing press (2) according to any one of Claims 1 to 6;
- a mould (11) placed between the plates (3, 5) of the vulcanizing press (2); and
- at least one pin (25) intended to fix the mould (11) to the vulcanizing press (2).
